# EUROPEAN PATENT APPLICATION

(11) **EP 1 968 356 A2**
(43) Date of publication of application: **10.09.2008**
(21) Application number: 08250769.0
(22) Date of filing: 06.03.2008
(51) Int. Cl.: H05B 37/02

(54) **Light switch used as a communication device**

(30) Priority: 07.03.2007 US 683298
(71) Applicant: Optimal Innovations Inc, Bridgetown (BB)
(72) Inventor: Schoettle, Roland, Freeport, Grand Bahama Island (BS)
(74) Representative: Jackson, Richard Eric

(57) **Abstract**

The present invention is directed to systems and methods which permit a light switch or other control device to operate as a communications device as well as a switch. The light switch or other control device is mounted or otherwise attached to a wall and is capable of operating alternatively in, or in coordination with, at least two separate modes. The first mode is typically a power control mode and the second mode is a communications mode. In the power control mode the light switch can operate singularly or can communicate through a remote controller with a light or electrical outlet to turn on/off the light or outlet. In the communications mode the user speaks into the switch and receives responses at the switch. The transmission of this device communication is handled internal to the switch or by the remote controller.

## Description

### CROSS-REFERENCE TO RELATED APPLICATIONS

The present application is related to concurrently filed, co-pending, and commonly assigned U.S. Patent Application No. 11/683,304, filed March 7, 2007, entitled "SYSTEMS AND METHODS FOR LINKING UTILITY CONTROL DEVICES"; U.S. Patent Application No. 11/683,327, filed March 7, 2007, entitled "SYSTEM AND METHOD FOR INFRASTRUCTURE REPORTING"; U.S. Patent Application No. 11/683,308, filed March 7, 2007, entitled "SYSTEM AND METHOD FOR PREMISES MONITORING USING WEIGHT DETECTION"; U.S. Patent Application No. 11/683,326, filed March 7, 2007, entitled "ANTICIPATORY UTILITY CONTROL DEVICE"; and U.S. Patent Application No. 11/683,335, filed March 7, 2007, entitled "PLUG AND PLAY UTILITY CONTROL MODULES", U.S. Patent Application No. 11/683,354, filed March 7, 2007, entitled "SYSTEM AND METHOD FOR SUBSTITUTING DATA IN RESPONSES TO MULTIMEDIA INQUIRIES," the disclosures of which are hereby incorporated herein by reference.

### TECHNICAL FIELD

The present disclosure is directed to control devices for a premises. More specifically, the present disclosure is directed to a control device, such as a light switch, that can also act as a high speed communications device.

### BACKGROUND OF THE INVENTION

Light switches and other types of controls are a commonly found item in most homes, offices and other premises. Generally, they are used for turning on and off lights in the room. However, these switches are sometimes wired to control a switched electrical outlet. In these cases the light switch turns on or off the power to the electrical outlet. Other controls typically found in a home can include controls for thermostats, alarm panels, and stored volume controls.

There are a number of types of light switches that are commonly found in a premises. These light switches include toggle switches which move up and down or side to side, depending on the orientation, to toggle between an on state and an off state. Additional types of light switches include sliders and rotatable knobs which allow the switch to cause the lights to vary through a number of illumination levels. These are often referred to as dimmer light switches. The choice of what type of switch to use for a given light is usually dependent on what the user wants for the light. The location of light switches can vary depending on the style of the home, the applicable building codes, the number of lights present, etc. However, a typical room in a home has at least one light switch located near an entry door.

In many homes and some rooms a separate outlet is provided for communications. These communications can include both voice and data communications, but typically are voice. Often connected to this outlet is a telephone or other communications device. In many homes the telephone is a cordless telephone, where the user can move freely within the house and carry on a telephone conversation. However, cordless phones suffer form battery rundown and poor quality sound due to signal loss and interference. In most homes a corded phone is still used. Docked cordless phones (for recharging) and corded phones are usually only located in one or two rooms of the home.

The ease of portable phones have lead to many users leaving the phone in one room, and needing to use the phone in another room. Typically, this occurs when the phone rings and the user ends up scrambling to find the phone in the house. Many times the inability to find the phone prior to either the answering service taking the call or the incoming caller ending the call is a source of frustration. In some instances scrambling for the phone can lead to injuries.

### BRIEF SUMMARY OF THE INVENTION

The present invention is directed to systems and methods which permit a light switch or other control device to operate as a communications device as well as a switch. The light switch or other control device is mounted or otherwise attached to a wall and is capable of operating alternatively in at least two separate modes. The first mode is typically a power control mode and the second mode is a communications mode. In the power control mode the light switch communicates through a remote controller with a light or electrical outlet to turn on/off the light or outlet. In the communications mode the user can use a key pad or other input method to contact a specific number, address or location such as touch screen, scanner, voice activation, or remote control, and then speaks into the switch and receives responses at the switch. The transmission of this device communication is handled by the switch or by a remote controller.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawings, in which:

FIGURE 1 shows one embodiment of a block diagram of a premises having a control system;

FIGURES 2A, 2B, and 2C show detailed views of an illustrative control device;

FIGURE 3A is an illustrative touch screen keypad/display for a control device in a power control mode; and

FIGURE 3B is an illustrative keypad/touch screen display for a control device in a communications mode.

### DETAILED DESCRIPTION OF THE INVENTION

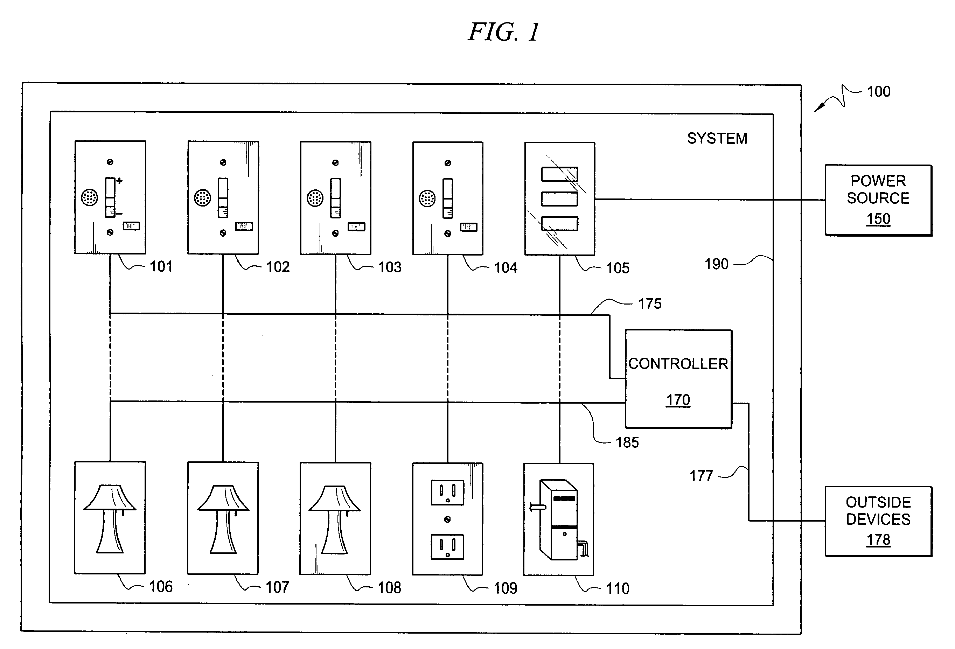

FIGURE 1 shows one embodiment of a block diagram illustrating a switch set-up found in premises 100. While the present discussion refers to a home or building, those skilled in the art will readily recognize that other areas or premises where switches are used can be substituted. Further, while the present discussion refers to a system which uses a central controller, those skilled in the art will readily recognize that a central controller is not required. Illustrated in premises 100 are a number of power control devices 101, 102, 103, 104 and 105. These control devices are connected to common building power sources. In one embodiment, this common household power is provided by outside power source 150. Outside power source 150 can be an electrical power station, a generator, a battery or any other source that can be connected to premises 100. Power source 150 can, for example, provide alternating current (AC) at 120 Volts/60 Hertz or 240 Volts/50 Hertz, or can be direct current (DC) at 12 Volts. However, other variations of the electrical power can be used. Control devices 101, 102, 103, 104, and 105 are each associated, in one embodiment, with a specific functions 106-110 as shown by the dotted lines. However, a control device can be associated with more than one function, if desired.

In the embodiment illustrated in FIGURE 1, control devices 101-105 include a single pole single throw switch. However, other types of control can be used, such as sliders, rotatable knobs, push buttons, keypads, touch screens, or any other arrangement capable of allowing a user to control an associated device or function. Note that one or more of these devices can be dimmers or variable controllers (as is shown with respect to device 101). It should be noted that in FIGURE 1 other types of control devices, such as those for controlling electrical outlets, temperature, or communications devices can be connected to system 190 as well. Note also that while there is described a native power control (such as on-off power) in combination with communication control, other pairings can also be employed, such as utility (native control) and: thermostat, medical monitoring, fire monitoring, security system, remote control relay, humidistat, energy monitoring, alarm system.

Each control device 101-105 is configured to communicate with central controller 170 in premises 100. Devices 101-105 are connected to central controller 170 through communications channel 175. In one embodiment, communications channel 175 is a local area network (LAN) cable. However, in other embodiments, communications channel 175 can be a CAT 5 cable, a telephone line, a household power line, a wireless connection, or any other method capable of carrying communications from devices 101-105 to controller 170. This central controller 170 is, in one embodiment, a computer. However, the controller is not required and any device that can manage an input signal, and generate an output signal can be used. Controller 170 identifies each device connected to system 190. In one embodiment, controller 170 then associates a function or functions with that device. This associated function is called a "native" function of the device. In one embodiment, each of the devices 101-105 is associated with a specific light in the home and thus their native function is not that of a switch. However, any device 101-105 need not be associated with a specific light, but can be associated with a group of lights, an electrical outlet, or any other function controllable by central controller 170. Controller 170 is connected to the associated functional devices, such as lights 106, 107, 108, outlet 109, or furnace 110. This connection is illustrated by communications channel 185. Controller 170 also can be connected to devices 178 remote from premises 100 over communications channel 177. Communications channel 177 is, in one embodiment, a telephone line. However, communications channel 177 can be any other communications line such as a cable line, DSL line, power line, fiber line or a wireless connection.

For purposes of simplicity the following discussion will refer to control device 101 and functional device 106. When device 101 is used, a signal is generated indicative of the desired action of the user. In the present illustrative embodiment, the user simply operates the switch by moving a switch component of switch 101 either up, for example, to turn on the light or down to turn off the light. This operation of the switch causes a signal to be generated and transmitted via communications channel 175 to controller 170. The type of signal generated can be any signal that controller 170 can interpret. Controller 170 interprets this signal, and determines the action the user desired. The controller then generates a second signal indicative of the desired action, and transmits that signal to the associated device over communications channel 185. This signal causes the associated device to perform the desired operation, such as turning on one light. Controller 170 can be, for example, a microprocessor, with a built in program that can keep track of a number of different operations. For example, in order to "anticipate" a user's probable next action (whether a power function or a communication function) several factors might be stored. These factors could be time of day, light intensity of the room, last action taken by the user, history of user operations, other situations within the premises, (such as rate of temperature rise, smoke, etc.), movement, preprogramming by the user, and the like. In this manner the next probable use of the device can be anticipated and, in situations where displays are used, the display can be appropriate for the anticipated use. Thus, where a soft key (touch sensitive changeable display) is used the display would match the possible options for the desired function.

Note that an embodiment of the system could have the function of controller 170 built into each switch such that the switch will then send the desired action to the appropriate device. In such an arrangement, the only "extra" wiring that would be required is to connect each switch to outside device 178. That wiring could be eliminated by using wireless technology or by sending the signals over the powerlines.

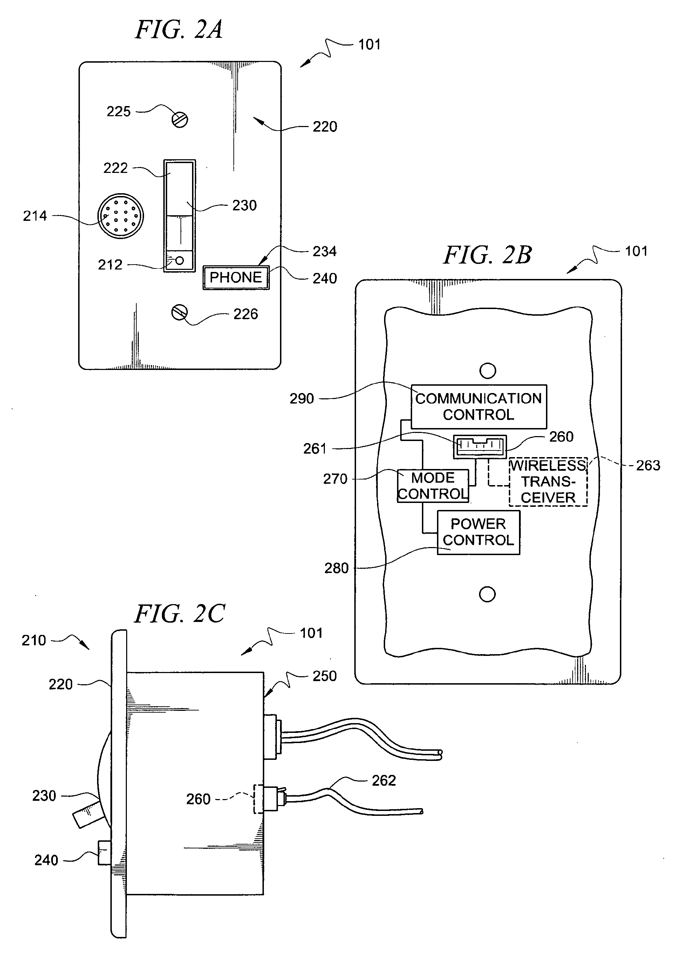

FIGURES 2A, 2B and 2C illustrate control device 101, in more detail, according to one illustrative embodiment. In these embodiments, control device 101 is configurable between a native control mode such as power, dimming, fan, plug or HVAC control and a communications mode. When in the communications mode control device 101 allows a user to communicate with another person(s) or with a machine, such as a telephone or a recording device. Depending on the selected mode, control device 101 may use different components.

For purposes of clarity, this discussion will first address the use of the control device in native power control mode followed by a discussion of the use of the control device in a communications mode. Note that the control device can also be a thermostat.

As shown in FIGURE 2C, control device 101 has a front side 210 and a back side 250. Front side 210 is the side that faces the user when mounted in a wall. Back side 250 typically faces the wall or receptacle, and provides interfaces from device 101 with external components, such as controller 170.

Illustrated on front side 210 is face plate 220, toggle switch 230 and mode selection device 240. Note that other components can be present, if desired.

Face plate 220 can be, and usually is, removable from control device 101. Typically face plate 220 is a rectangular plate with aperture 222 (FIGURE 2A) cut into the center. Additional apertures, such as aperture 234, are provided for mode selection devices, such as device 240. Screw holes 225 and 226 assist in the attachment of the face plate to the control device. While face plate 220 has been described as both rectangular and removable from control device 101, those skilled in the art will readily recognize that the shape of face plate 220 can be any shape desired, and that face plate 220 can be permanently attached to control device 101.

Mode selection device 240 is provided so that the user can selectively change the function of control device 101 from one mode to another, for example, from a power control mode to a communications mode. In one embodiment, mode selection device 240 is a single push button that is depressed by the user to change the function. However, other methods of changing the mode of control device 101 can be used. When using button 240 to change the mode, an indicator can be provided to alert the user to the currently selected operation mode. In one embodiment, mode selection device 240 has the word "phone" placed on it, and is illuminated when the device is in the communication mode. However, other methods can be used to indicate and/or select the current mode, such as two separate buttons or a toggle switch or voice activation. By using voice activation, the device can sense the proximity of the sound to the switch, and go in the communication mode based on the sound level or on some other parameter such as proximity sensors, scanners, motion sensors, access cards, security cards, credit cards.

Front side 210 includes (as shown in FIGURE 2A) additional components that allow control device 101 to function as a communications device. In particular, the front side has microphone 212 and speaker 214. Alternative embodiments can include, for example, a video camera, fingerprint scanner, card reader. These components may require additional apertures in face plate 220, but depending on the configuration these apertures are not required. Microphone 212 can be located in other areas of control device 101 and is not limited to being on the front side. Similarly, speaker 214 can be incorporated into switch 230 or anywhere else on the device. Individual I/O ports can also be included for external microphones and speakers. However, speaker 214 is generally incorporated into other areas of face plate 220.

Within housing 101 (as shown in FIGURE 2B) there are a number of components that permit the control device to function both in the native control mode and in the communications mode. These components can, illustratively, include communications device 260, mode selection component 270, power control unit 280, and communications control unit 290. However, those skilled in the art will recognize that the above list is not exclusive, and that more or less components can be present in control device 101.

Communications device 260 permits control device 101 to communicate the desired action to central controller 170. Central controller 170 processes the received signals and causes the desired action to be performed. In one embodiment, communications device 260 also includes connection component 261 that allows a physical connection to be established between control device 101 and controller 170 via cable 262. In one embodiment, this connection component 261 is a RJ45 connector. However, other types of wired connection components can be used. In alternative embodiments, connection component 261 is not wired to central controller 170, but is in communication with the central controller though a wireless connection. This wireless connection can be any known method of wirelessly connecting devices. To achieve a wireless connection, connection component 261 could include wireless transceiver 263 (illustrated in phantom) that allows for the transmitting and receiving of signals associated with the desired function of control device 101.

Power control unit 280 is either a mechanical or electrical component that is associated with switch 230. When power control unit 280 is a mechanical component it includes a switch mechanism that has a contact which moves from one location to another in response to an action applied to switch 230. This action causes a circuit in the switch mechanism to change states by opening or closing a circuit depending on the configuration of the switch and the desired action. This change in state is detected by power control unit 280. Following the detection of the change in state, power control unit 280 generates a signal indicative of the desired action. This signal is provided to communications device 260 for transmission to controller 170. If toggle switch 230 is an electrical switch, power control unit 280 receives an electrical signal indicative of the movement of toggle switch 230. In response to this sensed movement, power control unit 280 generates a signal indicative of the action for transmission to controller 170.

Communications control unit 290 (FIGURE 2B) is a component of control device 101 that converts received voice or video signals into electronic signals that are communicated to central controller 170 or processed internally in embodiments when the processor is within the device. Control unit 290 also converts received electrical signals into sound or video. Communications control unit 290 is further connected to microphone 212 and/or speaker 214.

In response to an action at mode selection device 240, mode control component 270 detects the desired mode change. Mode control component 270 reacts to the selection by the user by activating or deactivating certain components of control device 101. In particular, in one embodiment, mode control component 270 turns off or otherwise blocks signals from power control unit 280 in response to a command to enter the communications mode, and turns off or otherwise blocks signals from communications control unit 290 when the power control mode is selected. If desired, devices can be arranged to operate in one or more modes concurrently.

When control device 101 is in the communications mode, the user typically needs to indicate where the desired communication is directed. This communication could be directed to another control device in system 190, such as in an intercom system, or it could be directed to a device such as a telephone or mobile phone remote from system 190.

In one embodiment, the user identifies destination device 178 by speaking the desired location into the microphone. This spoken location is converted into speech signals and transmitted to controller 170. Controller 170 then performs speech recognition on the speech signals using any format or approach to speech recognition. Based on the results of the speech recognition, controller 170 determines where the user desires to communicate and generates a connection between the control device and the desired destination.

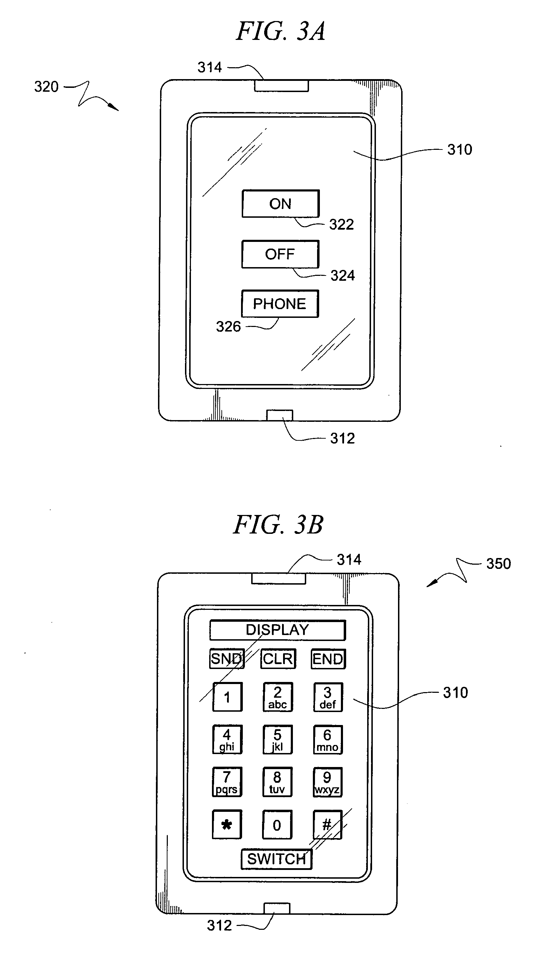

When the user speaks the destination the user can either identify the destination by name, such as "Call John Smith" or by sounding out the numbers associated with the destination, such as "1-214-555-1234". In alternative embodiments, face plate 220 of control device 101 can be a keypad or touch screen. When device 101 is in the communications mode, the display on keypad or touch screen 310 (discussed in greater detail with respect to FIGURES 3A and 3B) allows the user to key in the desired location. In such an embodiment, the controller receives electrical signals indicative of the keys pressed and uses these signals to route the connection to the desired destination. However, in its simplest form touch screen 310 can be a standard keypad for a phone.

Once the connection has been established between the control device and the destination device, the user then speaks into microphone 212 on control device 101. The microphone converts the user's speech into electrical signals and these electrical signals are, in one embodiment, converted into speech signals at communications control unit 290. From communications control unit 290 the speech signals are transmitted to controller 170 which then proceeds to transmit the speech signals to the desired device. As discussed above, the desired device can be a device connected to system 190, or it can be a device remote from the system, such as a mobile phone or a telephone located anywhere. Controller 170 receives speech signals from the target device, and transmits these signals back to the control device though channel 175. Mode selection unit 270 receives the signals and routes the signals to communications control unit 290 where the speech signals are connected to electrical signals. These electrical signals are then sent to speaker 214 which then converts the electrical signal into sound that is heard by the user.

FIGURES 3A and 3B illustrate embodiments of control device 101. In these embodiments the front side, such as sides 320 and 350 of control device 101, is a changeable display device, such as screen 310 of a display. Touch screen 310, in FIGURE 3A displays on-off switches, 322 and 324 and phone switch 326. Speaker 314 is located near the top of the touch screen and microphone 312 is located near the bottom of the touch screen.

Display 320 represents a display that can be displayed to a user when control device 101 is in the power control mode. Display 350 (FIGURE 3B) represents a display that can be displayed to a user when control device 101 is in the communication mode. These displays are only examples and those skilled in the art will readily recognize that other arrangements can be used for the display. The device could "anticipate" which mode it should be in by, for example, when a call is incoming to the system display 350 is used. Or during the daytime when lights would not normally be used the system could go into the communication mode. In another embodiment, all modes could be displayed simultaneously.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A control device comprising:
a control element having a native control function for controlling at least one managed device remote from said control device in response to a first user provided action;
a communications control element for providing communication features in response to a second user provided action; and
control operable for switching said control device between said native control element and said communications control element.

2. The control device of claim 1 wherein said control is further operable for simultaneously by enabling said native control element together with said communications control element.

3. The control device of claim 2 wherein said switching control is anticipatory based, at least in part, on expected user provided actions.

4. The control device of claim 1 further comprising:
a surface for presenting controls to a user, said surface changing presented ones of said controls based, at least in part, on a switched on one of said control elements.

5. The control device of claim 4 wherein said surface is a touch screen.

6. The control device of claim 1 wherein said second user action is a communicative action.

7. The control device of claim 6 wherein said communicative action comprises audible communications.

8. The control device of claim 1 wherein said actions are any combination of pre-programmed native or communicative actions in response to any combination of sensor or externally supplied information.

9. The control device of claim 1 wherein said automatic actions are any combination of native or communicative actions in response to any combination of sensor or externally supplied information.

10. The control device of claim 1 wherein said actions are any combination of user or automatic actions, native or communicative actions in response to any combination of sensor or externally supplied information.

11. The control device of claim 1 wherein said communication element comprises:
at least one audio visual device.

12. The control device of claim 1 wherein said communication features comprise: transmission and reception of voice signals.

13. The control device of claim 1 wherein said communication features comprise:
transmission and reception of voice messages.

14. The control device of claim 1 wherein said communication features comprise:
processing of voice messages and voice signals.

15. The control device of claim 1 wherein said native control function comprises:
a toggle switch configured to generate an on/off command.

16. The control device of claim 1 wherein said native control function comprises:
a variable switch configured to generate a variable command.

17. A method of controlling a power switch, said method comprising:
receiving a command corresponding to a selected mode of operation of said power switch; and
performing a function corresponding to an accepted command in response to a user provided action, said command relating to at least one of: controlling power; a communication operation mode.

18. The method of claim 17 wherein performing said communications function comprises:
receiving a power consumption change signal; and
processing said received power consumption change signal within said power switch.

19. The method of claim 18 wherein performing said communications function comprises:
receiving a voice signal; and
processing said voice signal within said power switch.

20. The method of claim 18 wherein performing said communications function comprises:
receiving a voice signal;
transmitting said received voice signal to a remote controller; and
receiving from said controller a voice signal.

21. The method of claim 18 wherein said performing said communications transmitting function comprises transmitting a video signal.

22. The method of claim 18 wherein said configuring comprises changing a user display to correspond to inputs associated with said selected mode.

23. The method of claim 22 wherein said receiving comprises:
sensing a touch of at least one displayed element on said display corresponding to a desired function.

24. The method of claim 22 wherein in accordance with said power function said method further comprises:
sensing a command indicative of an on/off variable condition; and
transmitting said sensed on/off variable command to a remote controller.

25. A power control device comprising:
means for selecting either a power control function or a communication function; means for accepting from a user a desired action pertaining to a selected function; and
means for transmitting an indication of said accepted action to a remote location.

26. The device of claim 25 wherein said transmitting means further comprising:
means for receiving a signal from said remote location.

27. The device of claim 25 wherein said selecting means comprises:
means for anticipating a next user desired function.

28. The device of claim 25 wherein said accepting means is a touch sensitive set of soft keys.

29. The device of claim 25 wherein said selecting means is adapted to accept input from a user.
